# EUROPEAN PATENT SPECIFICATION

(11) **EP 0 965 828 B1**
(45) Date of publication and mention of the grant of the patent: **19.12.2001**
(21) Application number: 99110315.1
(22) Date of filing: 27.05.1999
(51) Int. Cl.: G01L 3/14, B62M 23/02

(54) **Input torque detecting apparatus for power assist vehicle**
Drehmomentsensor für Fahrzeug mit Hilfsantrieb
Détecteur de couple pour un véhicule à assistance motorisée

(30) Priority: 18.06.1998 JP 17122898
(43) Date of publication of application: 22.12.1999
(73) Proprietor: HONDA GIKEN KOGYO KABUSHIKI KAISHA, Minato-ku Tokyo (JP)
(72) Inventor: Miura, Seishi, Wako-shi, Saitama (JP); Orita, Masayoshi, Wako-shi, Saitama (JP); Honda, Satoshi, Wako-shi, Saitama (JP)
(74) Representative: Liska, Horst, Dr.-Ing.

(56) References cited:
- US-A- 4 963 732
- PATENT ABSTRACTS OF JAPAN vol. 1998, no. 03, 27 February 1998 (1998-02-27) -& JP 09 286376 A (YAMAHA MOTOR CO LTD), 4 November 1997 (1997-11-04)
- PATENT ABSTRACTS OF JAPAN vol. 1997, no. 03, 31 March 1997 (1997-03-31) & JP 08 313376 A (SHISURABO:KK;C S INTERNATL:KK; SUZUKI RYOICHI), 29 November 1996 (1996-11-29)

## Description

The present invention relates to an input torque detecting apparatus for a power assist vehicle, including a first rotator which is rotated in synchronization with rotation of input operating members manually operated for rotating a drive wheel, and a second rotator which is disposed coaxially with the first rotator with an elastic member interposed between the first rotator and the second rotator and which is rotated in synchronization with rotation of the drive wheel, wherein an input torques into the input operating members is detected on the basis of a rotational phase difference produced between the first and second rotators.

Conventionally, such an input torque detecting apparatus has been known, for example, from JP (A) 09-286376. In this apparatus, a plurality of N-poles and S-poles are provided on first and second rotators, respectively, wherein magnetic poles provided on both the rotators are individually detected, to obtain a rotational phase difference between both the rotators, thereby detecting an input torque.

US-A-4963732 discloses a structure for connecting a rotary encoder to a rotary shaft via an Oldham's coupling joint to prevent misaligning.

The above prior art apparatus, however, has a disadvantage. Since the plurality of magnetic poles are directly provided on the first and second rotators, if an axial deviation occurs between the first and second rotators, the eccentric rotation of both the rotators may be erroneously recognized as occurrence of a torque although no torque actually occurs.

In view of the foregoing, the present invention has been made, and an object of the present invention is to provide an input torque detecting apparatus for a power assist vehicle, which is capable of accurately detecting an input torque even if an axial deviation occurs between both rotators.

To achieve the above object, according to an invention described in claim 1, there is provided an input torque detecting apparatus for a power assist vehicle, which basically includes: a first rotator which is rotated in synchronization with rotation of input operating members manually operated for rotating a drive wheel; and a second rotator which is disposed coaxially with the first rotator with an elastic member interposed between the first rotator and the second rotator and which is rotated in synchronization with rotation of the drive wheel; wherein an input torque into the input operating members is detected on the basis of a rotational phase difference produced between the first and second rotators. The apparatus further includes a first magnetic ring formed by providing a plurality of N-poles and S-poles, which are alternately, adjacently arranged in the circumferential direction into a ring shape, on an elastically deformable first retaining member rotating with the first rotator; a second magnetic ring formed by providing a plurality of N-poles and S-poles, which are arranged under the same angular positional relationship as that of the N-poles and S-poles of the first magnetic ring into a ring shape, on an elastically deformable second retaining member rotating with the second rotator; a plurality of first sensors, arranged at fixed positions facing to the first magnetic ring, for detecting the N-poles and S-poles of the first magnetic ring; a plurality of second sensors, arranged at fixed positions facing to the second magnetic ring, for detecting the N-poles and S-poles of the second magnetic ring; and a torque decision means for deciding a rotational phase difference between the first and second rotators on the basis of a combination pattern of signals detected by the first and second sensors and recognizing the rotational phase difference as an input torque to be applied to the input operating members; wherein one of the inner periphery and outer periphery of the first retaining member is in contact with the other of the inner periphery and outer periphery of the second retaining member at a plurality of positions spaced intervals in the circumferential direction.

With this configuration, a rotational phase difference occurs between the first rotator rotating with the input operating members and the second rotator rotating with the drive wheel, and also a rotational phase difference occurs between the first magnetic ring coupled to the first rotator and the second magnetic ring coupled to the second rotator. Accordingly, an input torque can be detected on the basis of a combination pattern of signals detected by a plurality of the first sensors and a plurality of the second sensors. Further, since one of the inner periphery and outer periphery of the first retaining member of the first magnetic ring coupled to the first rotator is in contact with the other of the inner periphery and outer periphery of the second retaining member of the second magnetic ring coupled to the second rotator, even if an axial deviation occurs between the first and second rotators, the remaining portions, other than mutual contact portions, of the first retaining member and second retaining member can be elastically deformed, to thereby keep the concentricity between the first and second retaining members. In this case, it may be considered that the friction of the first and second rotators may be increased because the axial deviation is corrected; however, since the first and second retaining members are in contact with each other only at a plurality of positions spaced at intervals in the circumferential direction, it is possible to keep smooth rotation of both the rotators by accurately finishing only the contact portions of both the retaining members. Accordingly, even if an axial deviation occurs between both the rotators, the adverse effect of the axial deviation is prevented from being exerted on the detection value of the input torque as much as possible, and thereby the input torque can be more accurately detected.

According to a preferred embodiment of the invention described in claim 2, in addition to the configuration of the invention described in claim 1, an intermediate coupling member is coupled to one of the first and second rotators in such a manner as to be movable in an allowable range in the direction along one diameter line of the one of the first and second rotators, and one of the first and second magnetic rings is coupled to the intermediate coupling member in such a manner as to be movable in an allowable range in the direction perpendicular to the diameter line. With this configuration, the intermediate coupling member functions as the Oldham's coupling, and accordingly, even if an axial deviation occurs between the first and second rotators, it is possible to prevent an excess load from being applied to the first and second retaining members.

Hereinafter, the mode for carrying out the present invention will be described by way of embodiments of the present invention with reference to the accompanying drawings.

Figs. 1 to 19 show a first embodiment in which the present invention is applied to an electric power assist vehicle.
Fig. 1 is a side view of an electric power assist vehicle according to a first embodiment;
Fig. 2 is an enlarged view of an essential portion shown in Fig. 1;
Fig. 3 is a sectional view taken on line 3-3 of Fig. 2;
Fig. 4 is an enlarged view of an essential portion shown in Fig. 3;
Fig. 5 is a sectional view taken on line 5-5 of Fig. 4;
Fig. 6 is a sectional view taken on line 6-6 of Fig. 4;
Fig. 7 is an enlarged sectional view taken on line 7-7 of Fig. 5.
Fig. 8 is an enlarged sectional view taken on line 8-8 of Fig.2.
Fig. 9 is an enlarged sectional view taken on line 9-9 of Fig.8.
Fig. 10 is a sectional view taken on line 10-10 of Fig. 9;
Fig. 11 is a sectional view taken on line 11-11 of Fig. 4;
Fig. 12 is a front view of an intermediate coupling member;
Fig. 13 is a sectional view taken on line 13-13 of Fig. 4;
Fig. 14 is a diagram showing a relative arrangement between first sensors and magnetic poles of a first magnetic ring;
Fig. 15 is a diagram illustrating a detection pattern of the first sensor depending on a change in circumferential position relative to the first magnetic ring;
Fig. 16 is a flow chart showing a procedure of controlling an electric motor by a control unit;
Fig. 17 is a diagram illustrating detection patterns of the first and second sensors depending on relative rotation of the first and second magnetic rings;
Figs. 18a and 18b are diagrams illustrating detection of a phase difference in a usual running state;
Figs. 19a to 19d are diagrams illustrating an axial deviation between the first and second magnetic rings;
Fig. 20 is a side view of an electric power assist bicycle according to a second embodiment;
Fig. 21 is a side view of an electric power assist bicycle according to a third embodiment;
Fig. 22 is a view seen along an arrow 22 of Fig. 21; and
Fig. 23 is a side view of an electric power assist bicycle according to a fourth embodiment.

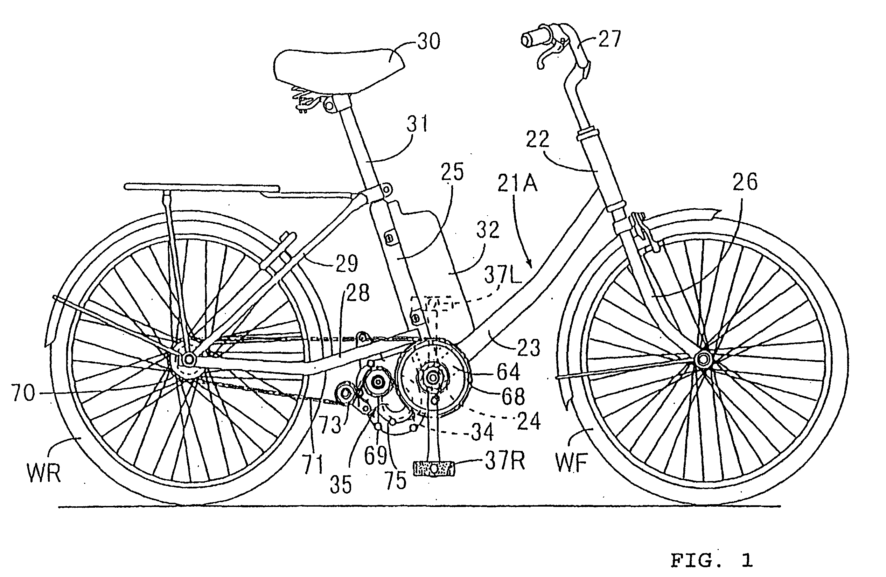

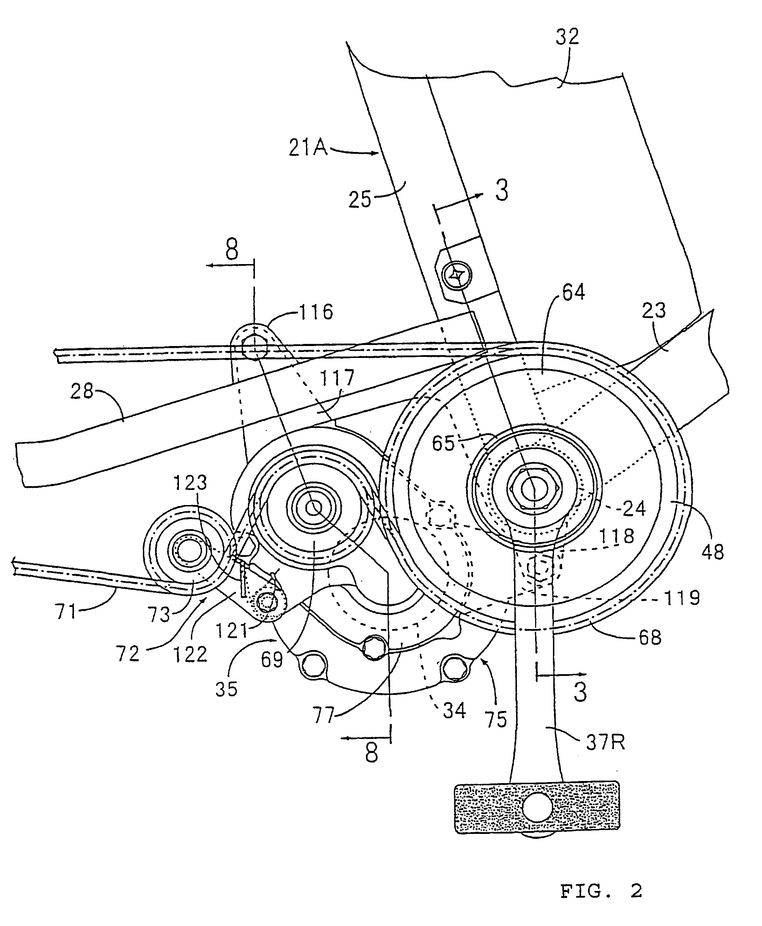

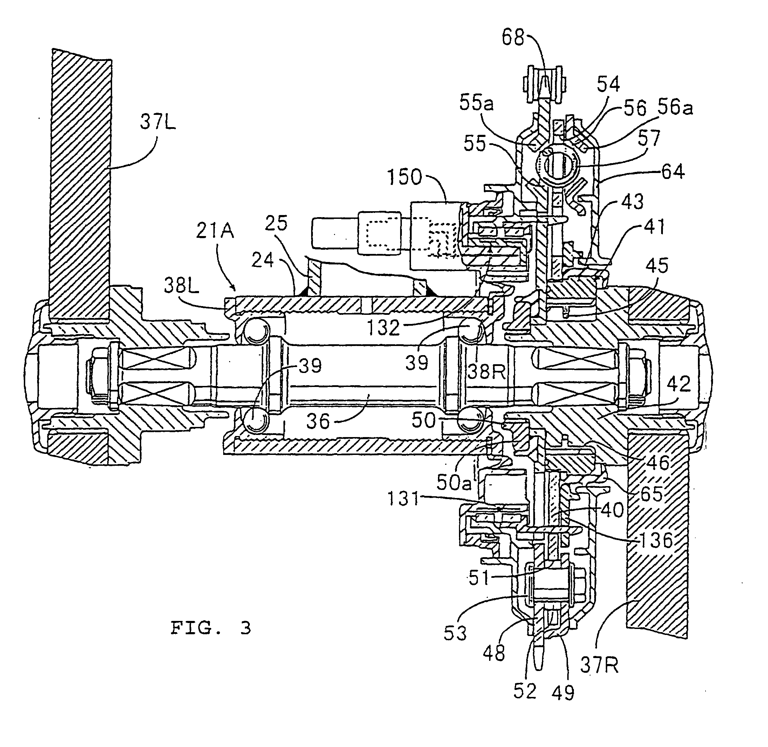

Referring to Figs. 1 to 3, a body frame 21A of an electric motor assist bicycle as a power assist vehicle includes a head pipe 22 mounted at the front end of the body frame 21A, a down pipe 23 extending rearwardly, downwardly from the head pipe 22, a supporting pipe 24 fixed at the rear end of the down pipe 23 and extending right and left, and a seat post 25 rising upwardly from the supporting pipe 24.

A front fork 26 is steerably supported by the head pipe 22. A front wheel WF is rotatably supported by the lower ends of the front fork 26, and a steering handle 27 is provided at the upper end of the front fork 26. A rear wheel WR as a drive wheel is rotatably supported between the rear ends of a pair of right and left forked portions of a rear fork 28 extending rearwardly from the seat post 25 provided at the rear portion of the body frame 21A. A pair of right and left stays 29 are provided between the upper portion of the seat post 25 and both the forked portions of the rear fork 28.

A supporting shaft 31 with a seat 30 on the upper end is mounted on the seat post 25 in such a manner as to allow adjustment of the vertical position of the seat 30. A battery containing box 32 for removably containing a battery (not shown) is provided on the front portion of the seat post 25 at a position lower than that of the seat 30.

A crank shaft 36 coaxially passes through the supporting pipe 24 of the body frame 21A. Crank pedals 37R and 37L as input operating members are fixedly connected to the right and left ends of the crank shaft 36, respectively. Cover plates 38R and 38L are provided at the right and left ends of the supporting pipe 24, respectively, in such a manner as to cover the right and left ends of the supporting pipe 24 while allowing the crank shaft 36 to rotatably pass therethrough. A ball bearing 39 is provided between each of the cover plates 38R and 38L and the crank shaft 36. That is to say, the crank shaft 36 is rotatably supported by the body frame 21A.

A power unit 35 having an electric motor 34 to which a power is supplied from a battery contained in the battery containing box 32 is disposed at the back of the supporting pipe 24. The power unit 35 is supported by the supporting pipe 24 and the right side forked portion of the rear fork 28.

An actuation force of the crank pedals 37R and 37L provided at both the right and left ends of the crank shaft 36 is transmitted to a first rotating disk 40 as a first rotator in synchronization with rotation of the crank pedals 37R and 37L. A first one-way clutch 41 for cutting off torque transmission from the first rotating disk 40 to the right side crank pedal 37R is provided between the crank pedal 37R and the first rotating disk 40.

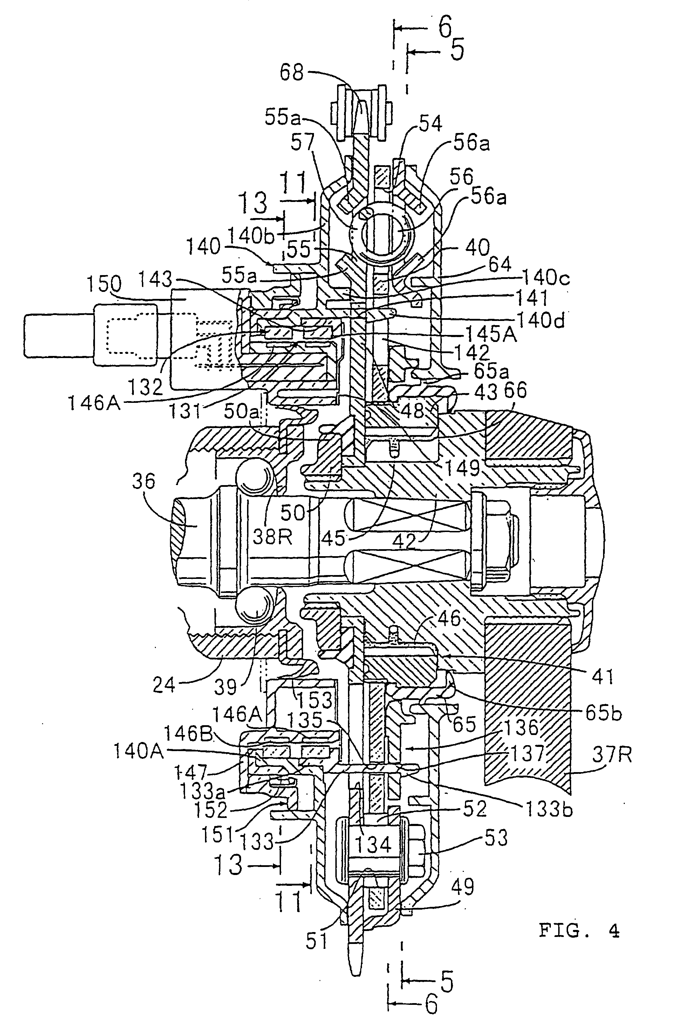

Referring to Figs. 4 to 6, the first one-way clutch 41 includes a clutch inner ring 42, a clutch outer ring 43, and a plurality, for example, three of rachet claws 44. The clutch inner ring 42 is integrally provided on the base end portion of the right side crank pedal 37R in such a manner as to coaxially surround the crank shaft 36. The clutch outer ring 43 is provided in such a manner as to coaxially surround the clutch inner ring 42. The rachet claws 44 are pivotably supported on the outer periphery of the clutch inner ring 42 and biased in the extension direction by an annular spring 45. Rachet teeth 46 with which the rachet claws 44 are to be engaged are formed on the inner periphery of the clutch outer ring 43. The inner periphery of the first rotating disk 40 is fixed on the outer periphery of the clutch outer ring 43.

Such a first one-way clutch 41 functions as follows: namely, when the crank shaft 36 is normally rotated by actuating the crank pedals 37R and 37L, the actuation force of the crank pedals 37R and 37L is transmitted to the first rotating disk 40; while when the crank shaft 36 is reversely rotated by actuating the crank pedals 37R and 37L, the first one-way clutch 41 is slipped to allow reverse rotation of the crank shaft 36 and not to allow transmission of torque from the first rotating disk 40 to the crank pedal 37R side.

A second rotating disk 48 as a second rotator, which has a diameter larger than that of the first rotating disk 40, is disposed inside the first rotating disk 40 along the axial line of the crank shaft 36 in such a manner as to be adjacent to the first rotating disk 40 and to coaxially surround the crank shaft 36. The inner peripheral portion of the second rotating disk 48 is relatively rotatably disposed between the clutch inner ring 42 of the first one-way clutch 41 and a flange portion 50a of a cylindrical supporting member 50. The supporting member 50 is coupled, by thread-coupling or the like, to the inner periphery of the clutch inner ring 42 in such a manner as to relatively rotatably surround the crank shaft 36. A ring-like retaining plate 49 is disposed outside the first rotating disk 40 along the axial line of the crank shaft 36 in such a manner as to retain the outer peripheral portion of the first rotating disk 40 between the second rotating disk 48 and the same.

Guide holes 51, each being arcuately elongated along a virtual circle centered on the axial line of the crank shaft 36, are formed in the first rotating disk 40 at a plurality, for example, four of positions which are located near the outer periphery of the first rotating disk 40 in such a manner as to be spaced at equal intervals along the circumferential direction. Cylindrical collars 52, passing through the associated guide holes 51, are disposed between the second rotating disk 48 and retaining plate 49. The second rotating disk 48 and retaining plate 49 are connected to each other with rivets 53 passing through the associated collars. 52. Accordingly, the second rotating disk 48 and retaining plate 49 can be rotated relative to the first rotating disk 40 in such a range that the collars 52 are movable in the guide holes 51. Rust-prevention films (not shown) for preventing occurrence of rust are stuck on facing planes of the first rotating disk 40 and each of the second rotating disk 48 and retaining'plate 49.

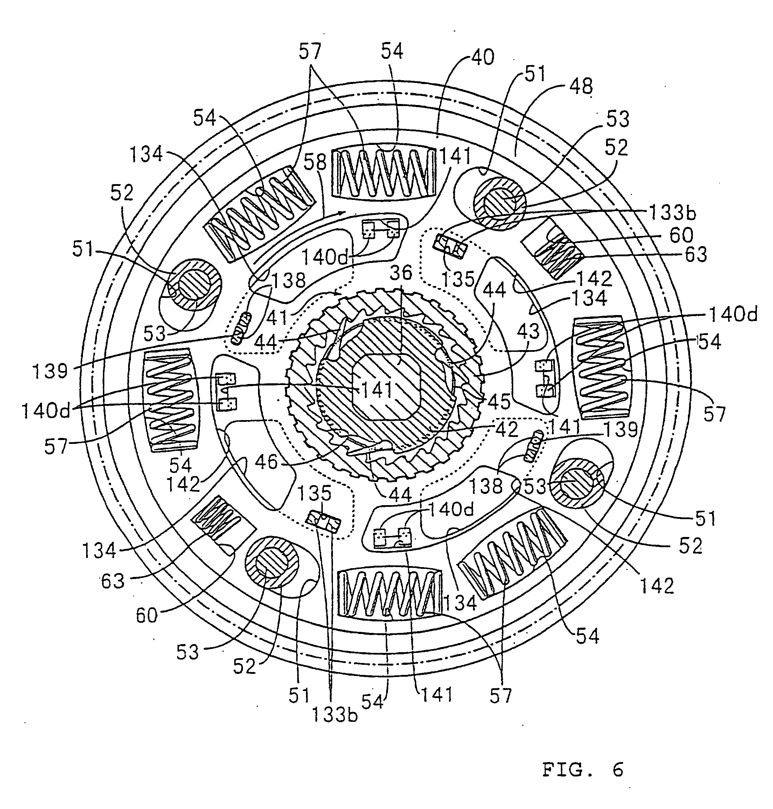

First containing holes 54, each of which is elongated relatively longer in the circumferential direction of the first rotating disk 40, are provided in the first rotating disk 40 at a plurality, for example, six of positions spaced at intervals in the circumferential direction of the first rotating disk 40. First restricting holes 55 and 56 corresponding to the first containing holes 54 of the first rotating disk 40 are also provided in the second rotating disk 48 and retaining plate 49, respectively. Coil springs 57 as elastic members are each contained in a space formed by one of the first containing holes 54 and the associated first restricting holes 55 and 56. When the first rotating disk 40 is not rotated relative to the second rotating disk 48 and retaining plate 49, both ends of each coil spring 57 are in contact with both ends of each of the associated first containing hole 54 and first restricting holes 55 and 56. On the other hand, when an operational force supplied from the crank pedals 37R and 37L is inputted into the first rotating disk 40 and the first rotating disk 40 is rotated relative to the second rotating disk 48 and retaining plate 49 in the direction shown by an arrow 58 in Fig. 6, one end of each coil spring 57 is left in contact with one end of the associated first containing hole 54, but the other end thereof is pushed by the other end of each of the associated first restricting holes 55 and 56 and is separated from the other end of the associated first containing hole 54. That is to say, the first rotating disk 40 is rotated relative to the second rotating disk 48 and retaining plate 49 while compressing the coil springs 57.

To hold the containing state of the coil springs 57 in the spaces formed by the first containing holes 54 and first restricting holes 55 and 56, the second rotating disk 48 is provided with pairs of holding walls 55a, each pair extending obliquely from both side edges of each first restricting hole 55 substantially along the outer periphery of the associated coil spring 57; while the retaining plate 49 is provided with pairs of holding walls 56a, each pair extending obliquely from both side edges of each first restricting hole 56 substantially along the outer periphery of the associated coil spring 57.

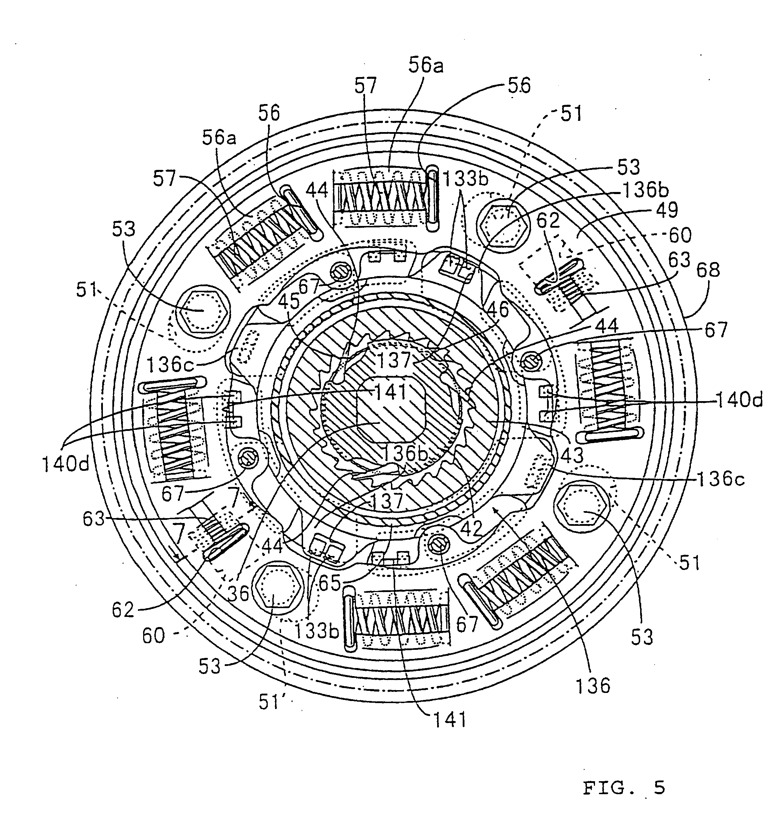

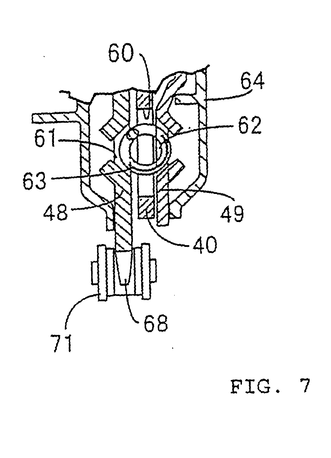

Referring to Figs. 5, 6 and 7, second containing holes 60, each of which is elongated relatively longer in the circumferetial direction of the first rotating disk 40, are provided in the first rotating disk 40 at a plurality, for example, two of positions spaced 180° in the circumferential direction of the first rotating disk 40. Second restricting holes 61 and 62 corresponding to the second containing holes 60 are provided in the second rotating disk 48 and restricting plate 49, respectively.

Coil-like counter springs 63 are each contained in a space formed by one of the second containing holes 60 and the associated second restricting holes 61 and 62. In a state in which an operational force supplied from the crank pedals 37R and 37L is not inputted into the first rotating disk 40, the second restricting holes 61 and 62 are offset from the second containing holes 60 in the circumferential direction of the first rotating disk 40, so that each counter spring 63 is contracted between one-sided end of the associated second containing hole 60 and the other-sided ends of the associated second restricting holes 61 and 62. Accordingly, in the state in which an operational force is not inputted into the first rotating disk 40, the counter springs 63 exhibit spring forces biasing the first rotating disk 40 in the direction reversed to that shown by the arrow 58 in Fig. 6, and as the first rotating disk 40 is rotated relative to the second rotating disk 48 and retaining plate 49 in the direction shown by the arrow 58, the spring loads of the counter springs 63 become small.

Even if a plurality, for example, six of the coil springs 57 have variations in setting loads, the counter springs 63 act to make constant an operational input into the first rotating disk 40 when the first rotating disk 40 starts to be rotated relative to the second rotating disk 48 and retaining plate 49 in the direction shown by the arrow 58.

The first rotating disk 40 and retaining plate 49 are covered with a cover 64 which is joined to the inner peripheral portion of the retaining plate 49 with a plurality, for example, four of clips 67. A lip portion 65a provided on the outer peripheral side of an annular elastic sealing member 65 mounted on the clutch outer ring 43 of the first one-way clutch 41 is elastically in contact with the inner surface of the inner peripheral portion of the cover 64, and a lip portion 65b provided on the inner peripheral side of the elastic sealing member 65 is elastically in contact with the clutch inner ring 42. A space formed between the clutch inner ring 42 and clutch outer ring 43 of the first one-way clutch 41 is filled with grease 66 and is sealed with the lip portion 65b.

A pedal sprocket 68 is provided on the outer periphery of the second rotating disk 48 projecting outwardly from the cover 64. An endless chain 71 is wound around the pedal sprocket 68, a drive sprocket 69 driven by the power unit 35, and a driven sprocket 70 provided on the axle of the rear wheel WR. A sprocket 73 of a tensioner 72 for imparting a tensile force to the chain 71 meshes with the chain 71 at a position between the drive sprocket 69 and driven sprocket 70.

The actuation force of the crank pedals 37R and 37L, which has been transmitted to the first rotating disk 40 via the first one-way clutch 41, is transmitted to the second rotating disk 48, that is, the pedal sprocket 68 while compressing the coil springs 57, and is further transmitted to the rear wheel WR via the chain 71 and driven sprocket 70. On the other hand, an assist power supplied from the power unit 35 to the drive sprocket 69 is transmitted to the rear wheel WR via the chain 71 and driven sprocket 70. A torque due to the assist power supplied from the power unit 35 is not transmitted to the crank pedals 37R and 37L by the action of the first one-way clutch 41.

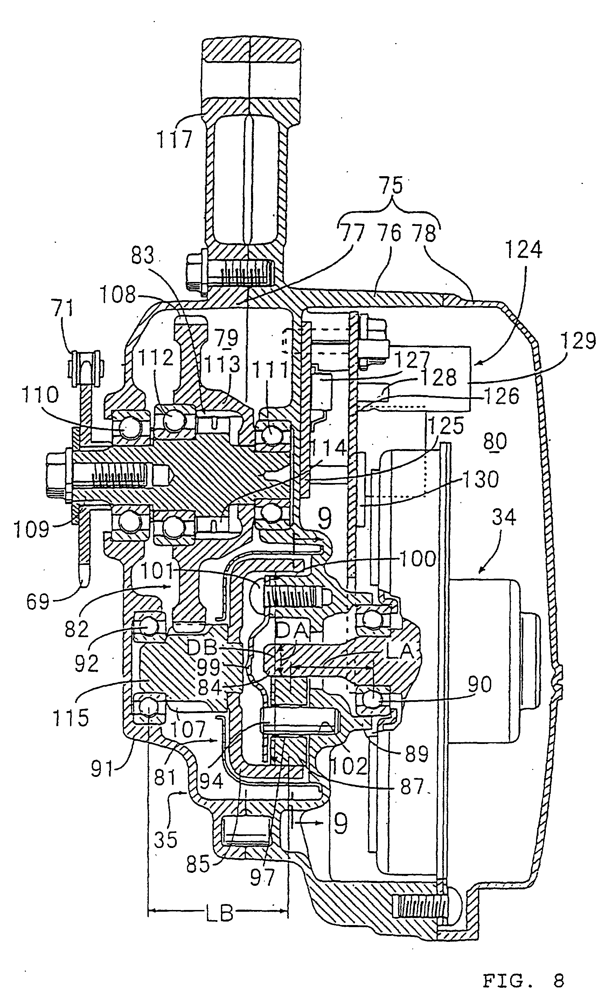

Referring to Fig. 8, a casing 75 of the power unit 35 includes a left casing half 76, a right casing half 77, and a cover 78. The right casing half 77 is joined to the left casing half 76 with a first containing chamber 79 put therebetween. The cover 78 is joined to the left casing half 76 with a second containing chamber 80 put therebetween.

The second containing chamber 80 contains the electric motor 34 having a rotational axial line parallel to that of the crank shaft 36. The electric motor 34 is fixedly supported by the left casing half 76. The output ' of the electric motor 34 is transmitted to the drive sprocket 69 via a reduction roller type speed reducer 81, a reduction gear train 82 and a second one-way clutch 83 in order to assist the actuation force of the crank pedals 37R and 37L.

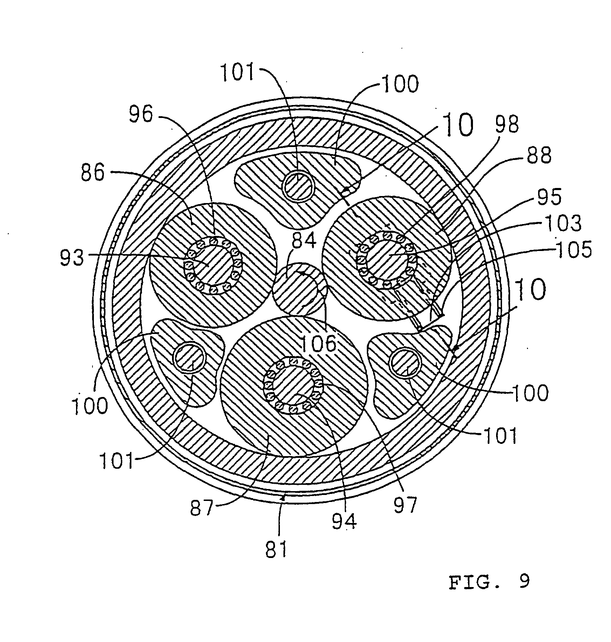

Referring to Figs. 8 and 9, the reduction roller type speed reducer 81 includes a motor shaft 84 of the electric motor 34, a bowl-like outer ring 85 surrounding the motor shaft 84, and a plurality, for example, three of reduction rollers 86, 87 and 88 rolling in contact with both the outer surface of the motor shaft 84 and inner surface of the outer ring 85. The speed reducer 81 has a function of speed-reducing an assist power generated by the electric motor 34 without occurrence of noise and transmitting the assist power thus speed-reduced onto the reduction gear train 82 side.

The motor shaft 84 is rotatably supported by a cylindrical first bearing portion 89 provided on the left casing half 76 via a ball bearing 90, and the end portion of the motor shaft 84 projects from the second containing chamber 80 onto the first containing chamber 79 side. The outer ring 85 is disposed in the first containing chamber' 79 in such a manner as to surround the end portion of the motor shaft 84 projecting onto the first containing chamber 79 side. The base end portion of an output shaft 115 is coaxially fixed at the center of the closed end portion of the bowl-like outer ring 85. A cylindrical second bearing portion 91 corresponding to the leading end of the output shaft 115 is provided on the right casing half 77, and the leading end of the output shaft 115 is rotatably supported by the second bearing portion 91 via a ball bearing 92.

The reduction rollers 86, 87 and 88 are rotatably supported by roller shafts 93, 94 and 95 via needle bearings 96, 97 and 98, respectively. One-ends of the roller shafts 93 to 95 are supported by the left casing half 77, and the other ends of the roller shafts 93 to 95 are supported by a supporting plate 99. The supporting plate 99 is fastened, by means of screw members 101, to boss portions 100 each of which is integrally provided on the left casing half 77 at a position between two adjacent ones of the reduction rollers 86, 87 and 88.

Of the reduction rollers 86 to 88, each of the reduction rollers 86 and 87 is supported by the left casing half 77 and supporting plate 99 in such a manner that the contact position of each of the reduction rollers 86 and 87 with the motor shaft 84 along the circumferential direction of the motor shaft 84 is kept fixed. Fitting holes 102 with their bottoms closed, to .each of which one end of the associated one of the roller shafts 93 and 94 of the reduction rollers 86 and 87 is to be fitted, are provided in the left casing half 77.

Of the reduction rollers 86 to 88, the reduction roller 88 is supported by the left casing half 77 and supporting plate 99 in such a manner that the contact position of the reduction roller 88 with the motor shaft 84 along the circumferential direction of the motor shaft 84 is made variable within an allowable range in order for the reduction roller 88 to be moved and bitten between the motor shaft 84 and outer ring 85 by frictional engagement with the motor shaft 84 upon rotation of the motor shaft 84.

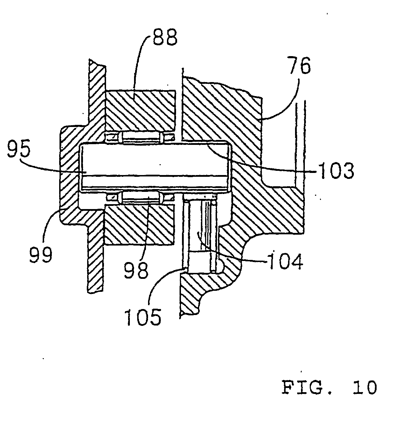

Referring to Figs. 8 and 10, a fitting hole 103 with its bottom closed, to which one end of the roller shaft 95 of the reduction roller 88 is to be fitted, is formed in the. left casing half 77. The fitting hole 103 is elongated substantially along the circumferential direction of the motor shaft 84. In the fitting hole 103, one end of a pressing pin 104 is in contact with the side surface of the roller shaft 95. A spring 105 for biasing ' the pressing pin 104 in the direction of bringing the pressing pin 104 into contact with the roller shaft 95 is provided between the pressing pin 104 and the left casing half 77. The reduction roller 88 is biased by the spring force of the spring 105 in the direction in which such a reduction roller 88 is bitten between the motor shaft 84 and outer ring 85.

With respect to the reduction rollers 86 to 88, the outside diameters of the reduction rollers 86 and 88 are identical to each other, while the outside diameter of the reduction roller 87 is larger than that of each of the reduction rollers 86 and 88. Accordingly, the axial line of the output shaft 115 is eccentric to the axial line of the motor shaft 84.

With the reduction roller type speed reducer 81 having the above configuration, when the motor shaft 84 is rotated in the direction shown by an arrow 106 in Fig. 9 by operation of the electric motor 34, the reduction roller 88 is bitten between the motor shaft 84 and outer ring 85 to thus exhibit the wedge action. As a result, the contact surface pressures between the reduction rollers 86 to 88 and the motor shaft 84 and between the reduction rollers 86 to 88 and the outer ring 85 are increased, so that the output torque from the motor 34 is transmitted from the motor shaft 84 to the output shaft 115 via the reduction rollers 86 to 88 and the outer ring 85. At this time, the periphery of the motor shaft 84 is restricted in the three directions by the reduction rollers 86 to 88, so that a force proportional to the drive torque of the electric motor 34 acts between the reduction rollers 86 to 88 and the motor shaft 84, whereby vibration caused by the electric motor 34 can be damped by the reduction roller type speed reducer 81.

The reduction gear train 82 is composed of a drive gear 107 as a power transmitting portion, and a driven gear 108 meshing with the drive gear 107. The drive gear 107 is integrally provided on the output shaft 115 at a position between the second bearing portion 91 of the right casing half 77 and the outer ring 85.

Incidentally, in the above-described reduction roller type speed reducer 81, the motor shaft 84 is supported by the first bearing portion 89 of the left casing half 76 via the ball bearing 90, while the output shaft 115 is supported in a cantilever manner by the second bearing portion 91 of the right casing half 77 via the ball bearing 92. Here, a length LA from the center of the ball bearing 90 to the axial center of each of the reduction rollers 86 to 88 is set to be larger than twice an outside diameter DA of a portion, in contact with each of the reduction rollers 86 to 88, of the motor shaft 84 (LA>DA×2), and a length LB from the axial center of each of the reduction rollers 86 to 88 to the axial center of the ball bearing 92 is set to be larger than half an inside diameter DB of the outer ring 85 (LB>DB×1/2).

With such a dimensional setting, even if the reduction rollers 86 to 88 of the reduction roller type speed reducer 81 are assembled with the motor shaft 84 at relatively rough accuracies, the supporting length from the ball bearing 90 to the motor shaft 84 and the cantilever-supporting length from the ball bearing 92 to the output shaft 115 can be each suitably set so that the effect of the above relatively rough assembly is minimized at the meshing portion between the drive gear 107 of the output shaft 115 and the driven gear 108.

The driven gear 108 of the reduction gear train 82 is disposed in such a manner as to coaxially surround a rotational drive shaft 109. The rotational drive shaft 109 is rotatably supported by the right casing half 77 via a ball bearing 110 and also rotatably supported by the left casing half 76 via a ball bearing 111. The drive sprocket 69 is fixed at the end portion, projecting from the right casing half 77, of the rotational drive shaft 109.

A ball bearing 112 and the second one-way clutch 83 are provided between the rotational drive shaft 109 and driven gear 108. The second one-way clutch 83 has a clutch outer ring 113 integrally provided on the driven gear 108 and a clutch inner ring 114 integrally provided on the rotational drive shaft 109. The configuration of the second one-way clutch 83 is the same as that of the first one-way clutch 41. The second one-way clutch 83 allows transmission of a torque, which has been generated by operation of the electric motor 34 and speed-reduced by the reduction roller type speed reducer 81 and reduction gear train 82, to the rotational drive shaft 109, that is, the drive sprocket 69; while it allows, when the operation of the electric motor 34 is stopped, idling of the rotational drive shaft 109 in order not to obstruct the rotation of the drive sprocket 69 by the actuation force of the crank pedals 37R and 37L.

Incidentally, the casing 75 is supported by the supporting pipe 24 of-the body frame 21A and the right side forked portion of the rear fork 28 in such a manner that the electric motor 34 is disposed behind, under the crank shaft 36. To be more specific, a hanger portion 117 provided on the casing 75 is fastened to a bracket 116 fixed on the right side forked portion of the rear fork 28, and a hanger portion 119 provided on the casing 75 is fastened to a bracket 118 fixed on the supporting pipe 24.

The tensioner 72 for stretching the chain 71 is mounted on the casing 75 at a position offset reawardly, obliquely downwardly from the drive sprocket 69. The tensioner 72 includes a lever 122, the sprocket 73, and a spring 123. The lever 122 is supported at its base end portion by the casing 75 in such a manner as to be swingable around the axial line parallel to the drive sprocket 69. The sprocket 73 is rotatably supported at the leading end of the lever 122. The spring 123 is adapted to bias the lever 122 in the direction of stretching the chain 71 meshing with the sprocket 73.

A controlunit 124 as a torque decision means is contained in the second containing chamber 80 at the side of the electric motor 34. The control unit 124 includes an aluminum board 125 mounted on the left casing half 76; a printed wiring board 126 mounted on the left casing half 76 with a gap put between the aluminum board 125 and the same; a FET 127 and the like arranged on the aluminum board 125; and a capacitor 128, a relay 129, a CPU 130, and the like arranged on the printed wiring board 126. The operation of the electric motor 34 is controlled by the control unit 124.

Referring again to Fig. 4, a first magnetic ring 131 rotating with the first rotating disk 40 is disposed opposite to the first rotating disk 40 with respect to the second rotating disk 48, and a second magnetic ring 132 rotating with the second rotating disk 48 is disposed at a position where the first magnetic ring 131 is put between the second magnetic ring 132 and the second rotating disk 48. That is to say, the first and second magnetic rings 131 and 132 are axially arranged on one side of the first and second rotating disks 40 and 48 in the axial direction.

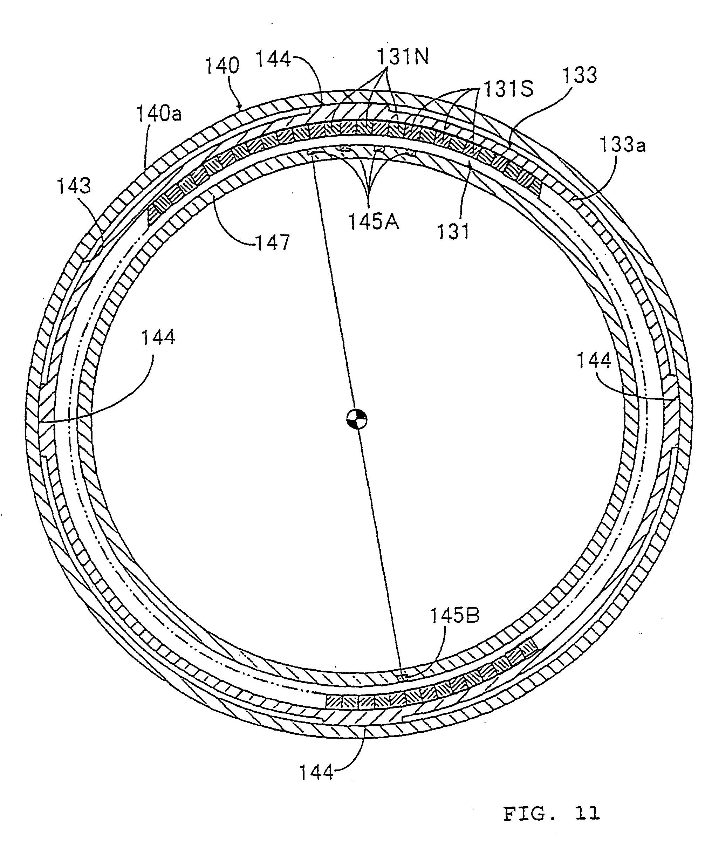

Referring to Fig. 11, the first magnetic ring 131 is formed by providing a plurality of N-poles 131N and a plurality of S-poles 131S, which are alternately, adjacently arranged in the circumferential direction into a ring shape, on an elastically deformable first retaining member 133 made from a synthetic resin or the like. To be more specific, 60 pieces of the N-poles 131N and 60 pieces of the S-poles 131S are alternately arranged on the first retaining member 133 with a center angle of 3° set between one N-pole 131N and the adjacent S-pole 131S.

The first retaining member 133 includes a cylindrical supporting portion 133a on the inner periphery of which the N-poles 131N and S-poles 131S are provided, and a pair of engagement claws 133b extending from the supporting portion 133a onto the first rotating disk 40 side. Both the engagement claws 133b are formed so as to be branched in the circumferential direction of the supporting portion 133a and are disposed along one diameter line of the supporting portion 133a.

Through-holes 134 are provided in the second rotating disk 48 adjacent to the first magnetic ring 131 at a plurality, for example, four of positions spaced at equal intervals in the circumferential direction of the second rotating disk 48. A pair of through-holes 135, which allow both the engagement claws 133b already passed through two of the through-holes 134 to pass therethrough, are provided in the first rotating disk 40.

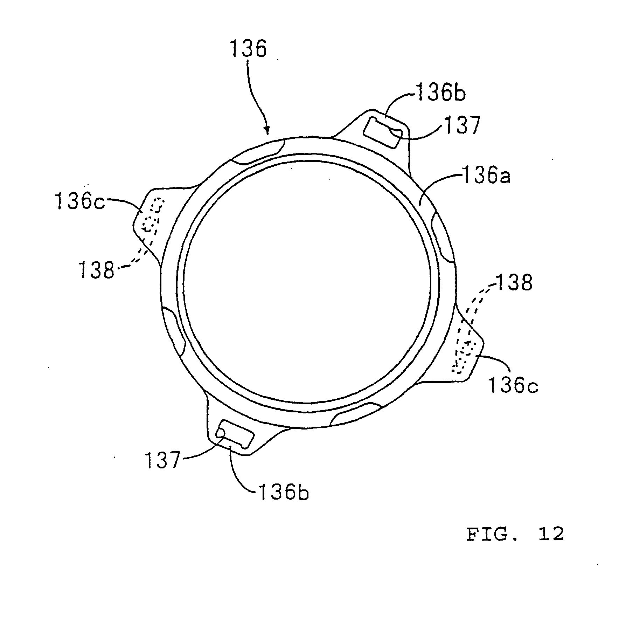

On the other hand, a synthetic resin made intermediate coupling member 136 shown in Fig. 12 is disposed inwardly from the retaining plate 49 at a position between the first rotating disk 40 and cover 64. The intermediate coupling member 136 integrally includes a ring portion 136a disposed in such a manner as to surround the elastic sealing member 65, a pair of first lugs 136b projecting outwardly from the outer periphery of the ring portion 136a along one diameter line of the ring portion 136a, and a pair of second lugs 136c projecting outwardly from the outer periphery of the ring portion 136a along another diameter line perpendicular to the above diameter line along which the first lugs 136b are disposed. The first lugs 135b have engagement holes 137 into which the engagement claws 133b projecting through the though-holes 135 of the first rotating disk 40 are to be elastically engaged. The second lugs 136c are integrally provided with two engagement claws 138 branched in the circumferential direction of the ring portion 136a, which engagement claws project onto the first rotating disk 40 side. Engagement holes 139 into which the engagement claws 138 are to be elastically engaged are provided in the first rotating disk 40.

The engagement claws 133b of the first retaining member 133 and the engagement claws 138 of the intermediate coupling member 136 are flexible because each of the first retaining member 133 and intermediate coupling member 136 is made from a synthetic resin. The intermediate coupling member 136 is coupled to the first rotating disk 40 in such a manner as to be movable in an allowable range in the direction along one diameter line of the first rotating disk 40, and the first retaining member 133 of the first magnetic ring 131 is coupled to the intermediate coupling member 136 in such a manner as to be movable in an allowable range in the direction perpendicular to the above diameter line. That is to say, the intermediate coupling member 136 couples the first rotating disk 40 to the first retaining member 133 in an Oldham' coupling manner.

Since the first and second rotating disks 40 and 48 are relatively rotated, the through-holes 134 provided in the second rotating disk 48 are elongated relatively longer in the circumferential direction of the second rotating disk 48 so that the engagement claws 133b are not brought into contact with both sides of the throughholes 134 in the circumferential direction when the first and second rotating disks 40 and 48 are relatively rotated.

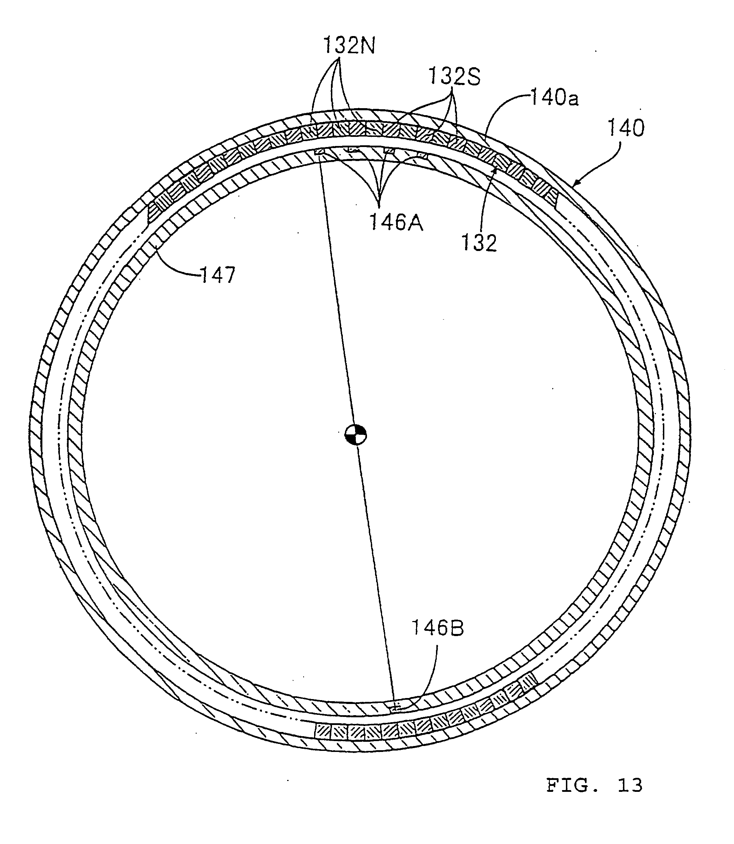

Referring to Figs. 4 and 13, the second magnetic ring 132 is formed by providing a plurality of N-poles 132N and a plurality of S-poles 132S, which are alternately, adjacently arranged in the circumferential direction into a ring shape, on an elastically deformable second retaining member 140 made from a synthetic resin or the like. To be more specific, the N-poles 132N and S-poles 132S are alternately arranged on the second retaining member 140 with the same center angle as that for the N-poles 131N and S-poles 131S of the first magnetic ring 131 set between one N-pole 132N and the adjacent S-pole 132S.

The second retaining member 140 integrally includes a cylindrical supporting portion 140a; a cover portion 140b; a plurality, for example, four of contact legs 140c; and two engagement claws 140d. The supporting portion 140a has the N-poles 132N and S-poles 132S provided on the inner periphery thereof. The cover portion 140b projects radially outwardly from the supporting portion 140a in such a manner as to cover the portions corresponding to the restricting holes 55 of the second rotating disk 48 on the side opposed to the first rotating disk 40. The contact legs 140c project from the cover portion 140b in such a manner as to be brought into contact with the second rotating disk 48. The engagement claws 140d are provided on the cover portion 140b at four positions spaced at equal intervals in the circumferential direction in such a manner as to project from the cover portion 140b onto the second rotating disk 48 side.

On the other hand, engagement holes 141 into which the engagement claws 140d are to be elastically engaged are provided in the second rotating disk 48 at a plurality, for example, four of positions spaced in the circumferential direction, and the second retaining member 140 of the second magnetic ring 132 is elastically engaged with the second rotating disk 48. Openings 142 in which the end portions of the engagement claws 140d engaged in the engagement holes 141 are to be located are provided in the first rotating disk 40. Since the first and second rotating disks 40 and 48 are relatively rotated, each of the openings 142 is elongated relatively longer in the circumferential direction of the first rotating disk 40 so that the associated engagement claw 140d is not brought into contact with both sides of the opening 142 in the circumferential direction when the first and second rotating disks 40 and 48 are relatively rotated.

A circular recess 143 is provided in an inner peripheral portion, on the second rotating disk 48 side, of the supporting portion 140a of the second retaining member 140, and the supporting portion 133a of the first retaining member 133 is inserted in the recess 143. Projections 144 to be in slide-contact with the inner surface of the recess 143 are integrally provided on the outer surface of the supporting portion 133a of the first retaining member 133 at a plurality, for example, four of positions spaced at equal intervals in the circumferential direction. As a result, the outer periphery of the supporting portion 133a of the first retaining member 133 is in contact with the inner periphery of the supporting portion 140a of the second retaining member 140 at the plurality of positions spaced in the circumferential direction.

On the inward side from the first magnetic ring 131, first sensors 145A for detecting the N-poles 131N and S-poles 131S provided on the inner periphery of the first magnetic ring 131 are provided at a plurality, for example, four of positions spaced at equal intervals in the circumferential direction, and a single first sensor 145B for detecting the N-poles 131N and S-poles 131S is disposed in such a manner as to be spaced 180° from one of the first sensors 145A in the circumferential direction. Meanwhile, on the inward side from the second magnetic ring 132, second sensors 146A for detecting the N-poles 132N and S-poles 132S provided on the inner periphery of the second magnetic ring 132 are provided at a plurality, for example, four of positions spaced at equal intervals in the circumferential direction, and a single second sensor 146B for detecting the N-poles 132N and S-poles 132S is disposed in such a manner as to be spaced 180° from one of the second sensors 146A in the circumferential direction.

As each of the first and second sensors 145A, 145B, 146A and 146B, there may be any sensor for detecting a magnetic pole, for example, a Hall element or MR element.

The first sensors 145A and 145B and second sensors 146A and 146B are buried in a base member 147 made from a synthetic resin, and the base member 147 is supported by the supporting pipe 24 of the body frame 21A. A supporting plate 149, having the outer periphery which is brought into contact with and engaged with the inner periphery of the first retaining member 131, is mounted on the base member 147. The supporting plate 149 prevents movement of the first retaining member 131 onto the second rotating disk 48 side.

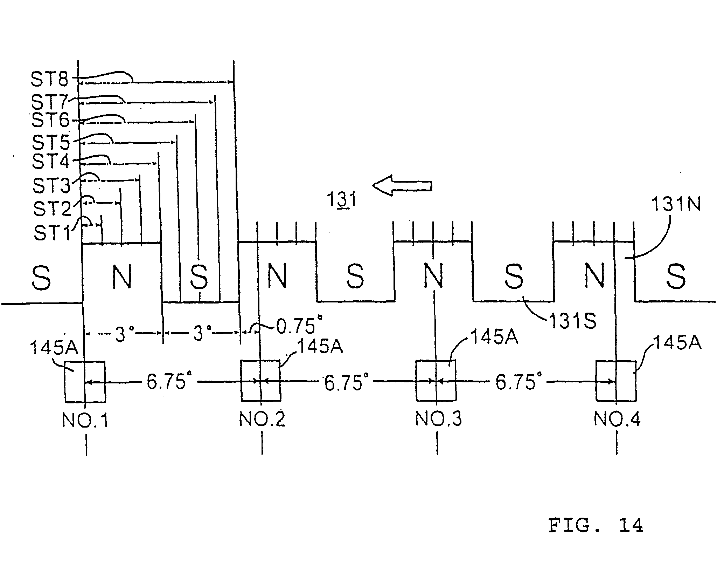

Referring to Fig. 14, while the N-poles 131N and S-poles 131S are arranged with a center angle of 3° set between the two adjacent ones thereof, four of the first sensors 145A are buried in the base member 147 in such a manner as to be spaced at equal intervals of 6.75°. With this arrangement of the first sensors 145A relative to the N-poles 131N and S-poles 131S, if the first magnetic ring 131 is angularly displaced relative to the fixed first sensors 145A in the direction shown by an arrow in Fig. 14, the combination pattern of signals detected by four of the first sensors 145A differs for each of first to eighth stages ST1 to ST8 which are set for each angular displacement of 0.75°.

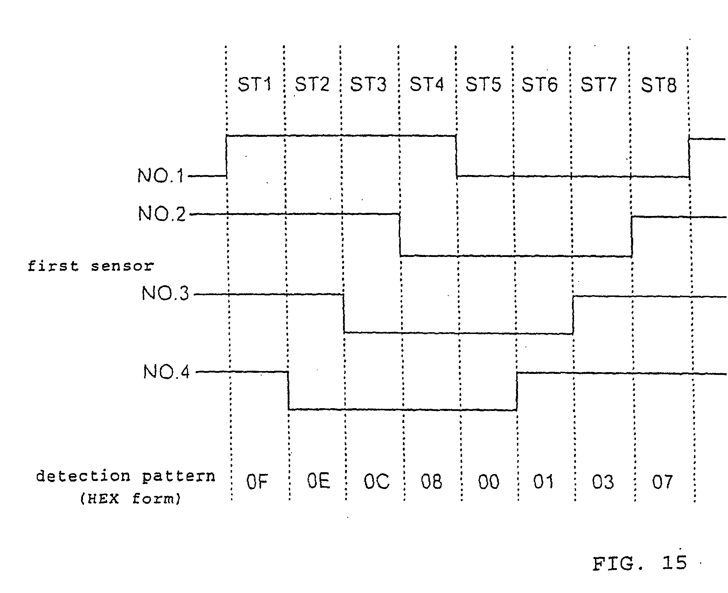

Here, four of the first sensors 145A are numbered No. 1 to No. 4 in the arrangement order, and it is assumed that each first sensor 145A outputs a high level signal upon detection of the N-pole 131N. In this case, the first sensors 145A (No. 1 to No. 4) output signals shown in Fig. 15 for each of the stages ST1 to ST8. That is to say, assuming that the high level signal is taken as [1] and the low level signal is taken as [0], at the first stage ST1, the combination of the output signals from the first sensors 145A is [1111] in binary form (OF in hexadecimal form); at the second stage ST2, the combination of the output signals from the firse sensors 145A is [1110] in binary form (OE in hexadecimal form); at the third stage ST3, the combination of the output signals from the first sensors 145A is [1100] in binary form (OC in hexadecimal form); at the fourth stage ST4, the combination of the output signals from the first sensors 145A is [1000] in binary form (08 in hexadecimal form); at the fifth stage ST5, the combination of the output signals form the first sensors 145A is [0000] in binary form (00 in hexadecimal form); at the sixth stage ST6, the combination of the output signals from the first sensors 145A is [0001] in binary form (01 in hexadecimal form); at the seventh stage ST7, the combination of the output signals from the first sensors 145A is [0011] in binary form (03 in hexadecimal form); and at the eighth stage ST8, the combination of the output signals from the first sensors 145A is [0111] in binary form (07 in hexadecimal form).

Four pieces of the second sensors 146A are buried in the base member 147 in such a manner that the relative positional relationship between the second sensors 146A and the N-poles 132N and S-poles 132S of the second magnetic ring 132 is the same as the relative positional relationship between the first sensors 145A and the N-poles 131N and S-poles 131S of the first magnetic ring 131. Like four of the first sensors 145A, when the second magnetic ring 132 is angularly displaced relative to the fixed second sensors 146A, the combination pattern of signals detected by four of the second sensors 146A differs for each angular displacement changed from the first to eighth stages ST1 to ST8.

Accordingly, if the maximum value of a rotational phase difference between the first and second rotating disks 40 and 48 is within a range of the eighth stage ST8 (8×0.75° = 6° ), respective combination patterns of the signals detected by the first and second sensors 145A and 146A are varied depending on the rotational phase difference caused by applying an-input torque to the crank pedals 37R and 37L, so that the control unit 124 can decide the rotational phase difference between both the rotating disks 40 and 48.

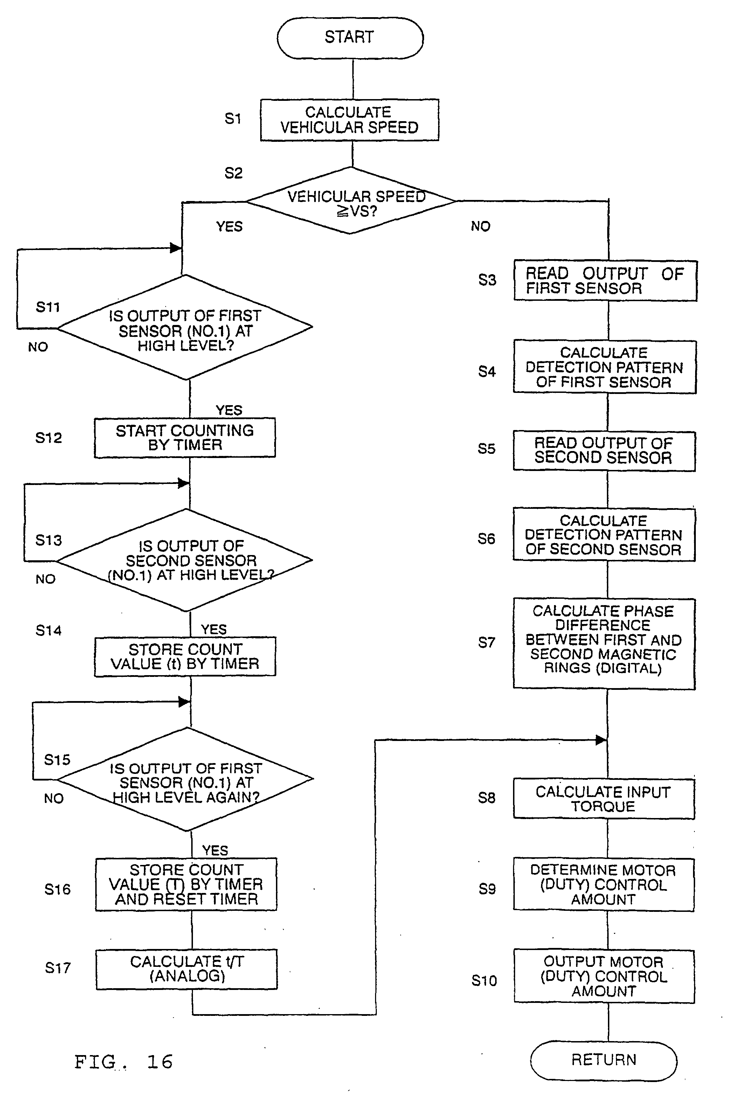

The signals detected by the first and second sensors 145A and 146A are inputted in the control unit 124, and the control unit 124 controls the operation of the electric motor 34 on the basis of the signals detected by the first and second sensors 145A and 146A in accordance with a control procedure shown in Fig. 16.

Referring to Fig. 16, a vehicular speed is first calculated at Step S1. At Step S2, it is decided whether or not the vehicular speed is a setting vehicular speed VS or more. The vehicular speed VS for decision criterion is previously set at a value near [0], for example, in a range of 0.5 to 1 km/h in order to decide whether or not the electric power assist bicycle is substantially in the stoppage state before running upon start of actuation of the crank pedals 37R and 37L. If it is decided that the vehicular speed is less than the setting vehicular speed VS, that is, the crank pedals 37R and 37L start to be actuated, the process goes on to Step S3.

At Step S3, the outputs of four of the first sensors 145A are read, and at Step S4, the detection pattern of four of the first sensors 145A is calculated. Then, at Step S5, the outputs of four of the second sensors 146A are read, and at Step S6, the detection pattern of four of the second sensors 146A is calculated. At Step S7, a phase difference between the first and second magnetic rings 131 and 132, that is, a rotational phase difference between the first and second rotating disks 40 and 48 is calculated by the combination of the detection patterns of the first sensors 145A and second sensors 146A.

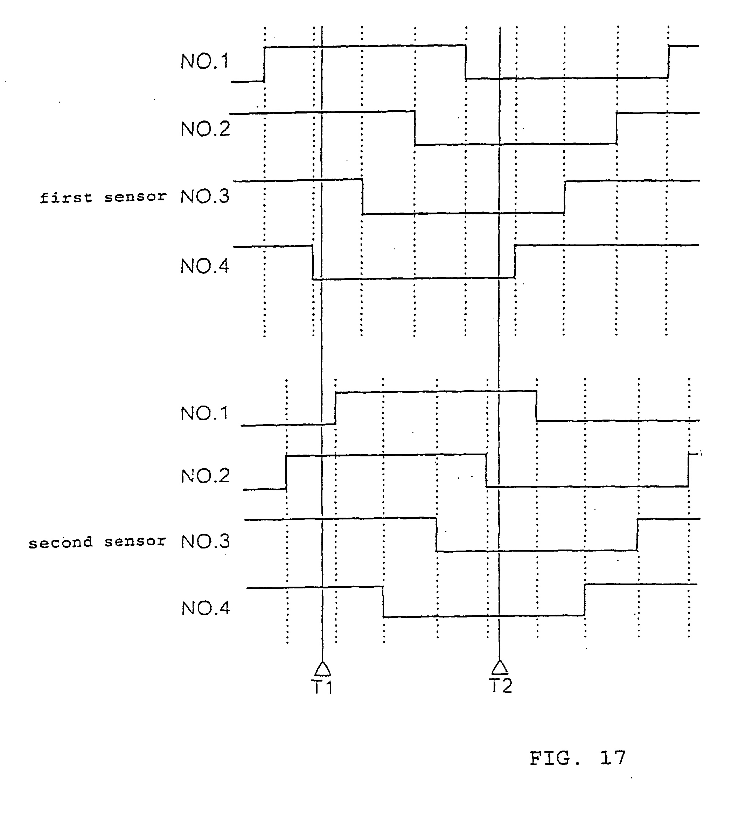

Here, it is assumed that the output signals from the first sensors 145A (No. 1 to No. 4) and the output signals from the second sensors 146A (No. 1 to No. 4) obtained in a state in which a rotational phase difference occurs between both the rotating disks 40 and 48 depending on the inputted torque, are as shown in Fig. 17. In this case, at a detection timing T1, the detection pattern of the first sensors 145A is [0E] (hexadecimal form) while the detection pattern of the second sensors 146A is [07] (hexadecimal form). Accordingly, the detection pattern of the first sensors 145A exhibits that at the second stage ST2 while the detection pattern of the second sensors 146A exhibits that at the eighth stage ST8, so that a rotational phase difference between both the rotating disks 40 and 48 is an angular displacement of stages (2 - 8 = -6), which is followed by complementary operation based on the fact that the number of the stages is [8], with a result that the rotational phase difference becomes an angular displacement of two stages (0.75° + 0.75° = 1.5° ). At a detection timing T2, the detection pattern of the first sensors 145A is [00] (hexadecimal form) while the detection pattern of the second sensors 146A is [08] (hexadecimal form). That is to say, the detection pattern of the first sensors 145A exhibits that at the fifth stage ST5 while the detection pattern of the second sensors 146A exhibits that at the fourth stage ST4, with a result that a rotational phase difference between both the rotating disks 40 and 48 is an angular displacement of stages (5 - 4 = 1), that is, the rotational phase difference becomes an angular displacement of one stage (0.75° ).

In this way, when a torque being in a range of one-eighth to two-eighths the detectable maximum torque is inputted, at Step S7, a rotational phase difference equivalent to an angular displacement of one stage or two stages is obtained in digital form at a selected detection timing by the combination of the detection patterns of the first sensors 145A and second sensors 146A. Then, at Step S8, an input torque is obtained by multiplying the above rotational phase difference by the spring constant of the coil springs 57 provided between the first and second rotating disks 40 and 48.

At Step S9, a motor control amount depending on the ' input torque obtained at Step S8 is determined. In this case, since the operation of the electric motor 34 is subjected to duty control, the duty control amount of the electric motor 34 is calculated at Step S9, and at Step S10, the control amount is outputted.

The procedure of Steps S1 to S10 is carried out for detection of an input torque upon start of actuation of the crank pedals 37R and 37L and for control of operation of the electric motor 34 based on the input torque thus detected. When the electric power assist bicycle comes to be in the usual running state, a procedure of Steps S11 to S17 is carried out, followed by the procedure of Steps S8 to S10. To be more specific, at Step S2, if it is decided that the vehicular speed is equal to or more than the setting vehicular speed VS, the process is shifted from Step 2 to Step S11. At Step S11, it is decided whether or not the output of No. 1 of four of the first sensors 145A becomes the high level. If YES, the counting by a timer starts at Step S12.

At Step S13, it is decided whether or not the output of No. 1 of four of the second sensors 146A becomes the high level. If YES, the count "t" by the timer is stored at Step S14. Then, at Step S15, it is decided whether or not the output of No. 1 of four of the first sensors 145A becomes the high level again. If YES, a count "T" by the timer is stored and the timer is reset at Step S16.

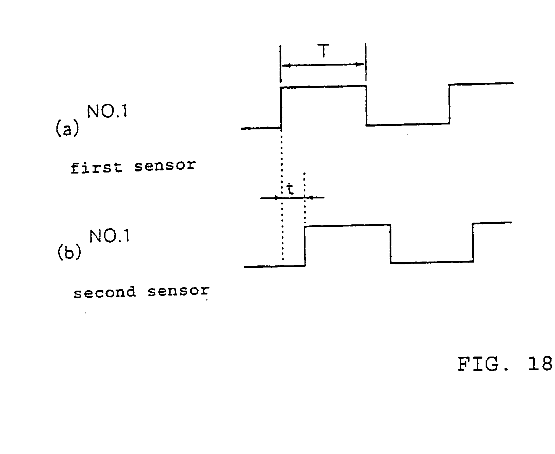

In the above procedure of Steps S11 to S16, the output of the first sensor 145A (No. 1) is, for example, as shown in Fig. 18(a) and the output of the second sensor 146A (No. 1) is, for example, as shown in Fig. 18(b). In this case, the count "t" designates a deviation in output between the first and second sensors 145A (No. 1) and 146A (No. 1), and the count "T" designates a detection cycle of the first sensor 145A (No. 1).

At Step S17, t/T is calculated. In this way, a phase difference between the first and second magnetic rings 131 and 132, that is, a phase difference between the first and second rotating disks 40 and 48 is obtained as the analog value t/T at Step S17. After that, the control of operation of the electric motor 34 in the usual running state of the electric power assist bicycle is carried out under the above-described procedure of Steps S8 to S10.

A coupler portion 150 for taking out signals from the sensors 145A, 145B, 146A and 146B is integrally provided on the base member 147. A labyrinth structure 151 is provided between the first and second magnetic rings 131 and 132 and the base member 147. An annular sealing member 152 to be in slide-contact with the second magnetic ring 132 is provided on the base member 147, and an annular sealing member 153 to be slide-contact with the base member 147 is held between a cover plate 38R screwed in the right end of the supporting pipe 24 and the supporting pipe 24.

Next, the function of the first embodiment will be described. When a driver actuates the crank pedals 37R and 37L for moving the electric power assist bicycle, the actuation force of the crank pedals 37R and 37L is transmitted to the pedal sprocket 68 via the first one-way clutch 41, first rotating disk 40, coil springs 57 and second rotating disk 48, and further the power is transmitted to the rear wheel WR via the chain 71 and driven sprocket 70.

The actuation force of the crank pedals 37R and 37L causes a rotational phase difference while compressing the coil springs 57 between the first and second rotating disks 40 and 48. At this time, the control unit 124 calculates an input torque on the basis of a combination of detection signals of a plurality of the first sensors 145A for detecting the N-poles 131N and S-poles 131S of the first magnetic ring 131 rotating with the first rotating disk 40 and detection signals of a plurality of the second sensors 146A for detecting the N-poles 132N and S-poles 132S of the second magnetic ring 132 rotating with the second rotating disk 48. The control unit 124 controls the electric motor 34 in such a manner that the electric motor 34 outputs an assist power based on the input torque, to control the rotational assist power of the drive sprocket 69, thereby reducing the load of the driver.

In such an electric power assist bicycle, even in the initial actuation state of the crank pedals 37R and 37L in which the rear wheel WR is not rotated yet, the first rotating disk 40 causes a rotational phase difference with respect to the second rotating disk 48, so that the first magnetic ring 131 causes a rotational phase difference with respect to the second magnetic ring 132. As a result, the combination patterns of signals detected by the first sensors 145A and second sensors 146A are varied from those in the state before actuation of the crank pedals 37R and 37L, so that an input torque can be immediately detected at the initial stage of starting input operation in the stoppage state of the vehicle and thereby an assist power based on the input torque can be generated by the electric motor 34 and imparted to the rear wheel WR.

According to the present invention, in the state in which the rear wheel WR is not rotated at the initial stage of actuating the crank pedals 37R and 37L, an input torque is calculated on the basis of a rotational phase difference obtained in digital form; while in the usual running state of the electric power assist bicycle, an input torque is linearly calculated on the basis of a rotational phase difference obtained in analog form. Accordingly, an assist power linearly based on the input torque can be obtained by generating the assist power based on the linear input torque by the electric motor 34. In this way, in the entire region from the initial stage of actuating the crank pedals 37R and 37L to the usual running state, it is possible to certainly detect an input torque and to impart an assist power generated by the electric motor 34 to the rear wheel WR.

Since the outer periphery of the first retaining member 133 of the first magnetic ring 131 rotating with the first rotating disk 40 is in contact with the inner periphery of the second retaining member 140 of the second magnetic ring 132 rotating with the second rotating disk 48, the remaining portions, other than the mutual contact portions, of the first retaining member 133 and second retaining member 140 can be elastically deformed, to keep the concentricity between the first retaining member 133 and second retaining member 140. In this case, it may be considered that the friction of the first and second rotating disks 40 and 48 is increased because the axial deviation is corrected; however, since the first and second retaining members 133 and 140 are in contact with each other only at a plurality of positions spaced at intervals in the circumferential direction, it is possible to keep smooth rotation of both the rotating disks 40 and 48 by accurately finishing only the mutual contact portions of both the retaining members 133 and 140. As a result, even if an axial deviation occurs between both the rotating disks 40 and 48, the adverse effect of the axial deviation is prevented from being exerted on the detection value of the input torque as much as possible, and thereby the input torque can be more accurately detected.

Since the intermediate coupling member 135 is coupled to the first rotating disk 40 in such a manner as to be movable in an allowable range in the direction along one diameter line of the first rotating disk 40 and the first magnetic ring 131 is coupled to the intermediate coupling member 135 in such a manner as to be movable in an allowable range in the direction perpendicular to the above one diameter line, the intermediate coupling member 135 functions as the Oldham's coupling. Accordingly, even if an axial deviation occurs between both the first and second rotating disks 40 and 48, it is possible to prevent an excess load from being applied to the first and second retaining members 133 and 140.

Incidentally, in this embodiment, four of the first sensors 145A, facing to the first magnetic ring 131, are spaced at equal intervals in the circumferential direction, and the single first sensor 145B is disposed in such a manner as to be spaced 180° from one of the first sensors 145A in the circumferential direction; while four of the second sensors 146A, facing to the second magnetic ring 132, are spaced at equal intervals in the circumferential direction, and the single second sensor 146B is disposed in such a manner as to be spaced 180° from one of the second sensors 146A in the circumferential direction. With such an arrangement of the first sensors 145A and 145B, and second sensors 146A and 146B, even if an axial deviation occurs between both the magnetic rings 131 and 132, an input torque can be accurately detected.

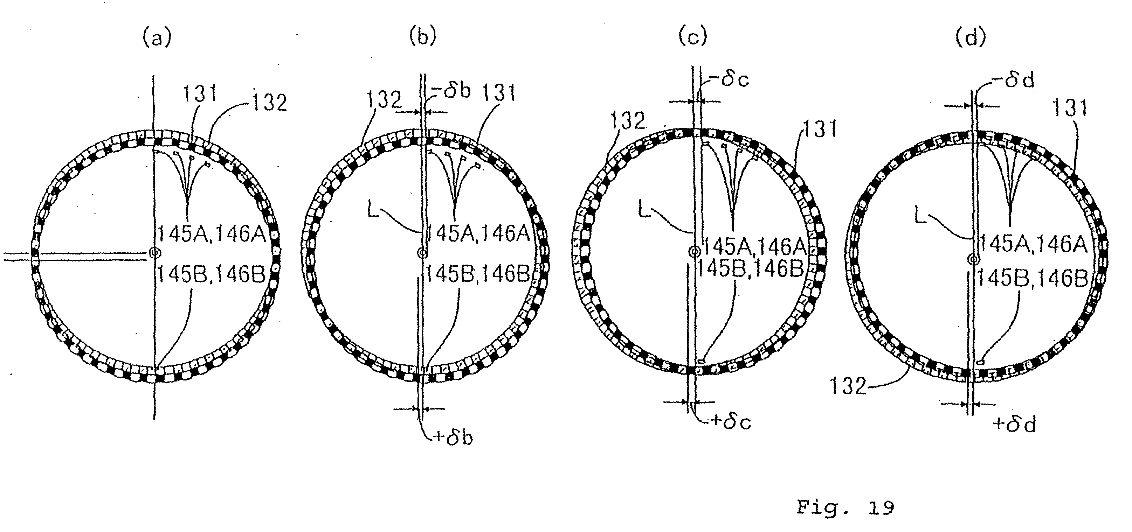

To be more specific, as shown in Fig. 19(a), assuming that both the magnetic rings 131 and 132 are deviated in the direction along a straight line L connecting one of four of the first sensors 145A to the single'first sensor 145B and connecting one of four of the second sensors 146A to the single second sensor 146B, there is no deviation between a phase detected by the one of the first sensors 145A (or second sensors 146A) and a phase detected by the single first sensor 145B (or single second sensor 146B). As shown in Fig. 19(b), assuming that both the magnetic rings 131 and 132 are deviated in the direction tilted 45° from the straight line L, the absolute value of a delay - δb of the phase detected by the one of the first sensors 145A (or second sensors 146A) is equal to the absolute value of an advance + δ b of the phase detected by the single first sensor 145B (or single second sensor 146B). As shown in Fig. 19(c), assuming that both the magnetic rings 131 and 132 are deviated in the direction tilted 90° from the straight line L, the absolute value of a delay - δc of the phase detected by the one of the first sensors 145A (or second sensors 146A) is equal to the absolute value of an advance + δ c of the phase detected by the single first sensor 145B (or single second sensor 146B). As shown in Fig. 19(d), assuming that both the magnetic rings 131 and 132 are deviated in the direction tilted 135° from the straight line L, the absolute value of a delay - δ d of the phase detected by the one of the first sensors 145A (or second sensors 146A) is equal to the absolute value of an advance + δ d of the phase detected by the single first sensor 145B (or single second sensor 146B). Accordingly, even if an axial deviation occurs between both the magnetic rings 131 and 132, a phase difference between both the magnetic rings 131 and 132 can be accurately detected by halving the sum of a phase detected by one of four of the first sensors 145A (or second sensors 146A) and a phase detected by the single first sensor 145B (or single second sensor 146B), and an input torque can be accurately detected on the basis of the phase difference thus obtained.

As a method of obtaining an assist power accurately based on an input torque even if an axial deviation occurs between both the magnetic rings 131 and 132, there may be adopted a method of driving the electric motor 34 by alternately changing a rotational phase difference detected by four of the first sensors 145A (or second sensors 146A) and a rotational phase difference detected by the single first sensor 145B (or single second sensor 146B). Such drive of the electric motor 34 using the rotational phase difference alternately changed with an elapsed time is equivalent to the drive of the electric motor 34 using a rotational phase difference obtained by the above method of halving the sum of a phase detected by the one first sensors 145A (or second sensors 146A) and a phase detected by the single first sensor 145B (or single second sensor 146B), to thereby make it possible to obtain an assist power accurately based on an input torque.

In the present invention, the reduction roller type speed reducer 81 for transmitting a power supplied from the electric motor 34 onto the reduction gear train 82 side includes the motor shaft 84 connected to the electric motor 34, a plurality of the reduction rollers 86, 87 and 88 in rolling-contact with the outer surface of the motor shaft 84, and the outer ring 85 having the inner surface with which the reduction rollers 86 to 88 are in rolling-contact. In the speed-reducer 81, the motor shaft 84 of the electric motor 34 mounted on the outer surface side of the left casing half 76 is supported by the first bearing portion 89 provided on the , left casing half 76 via the bearing 90; the roller shafts 93, 94 and 95 for rotatably supporting the reduction rollers 86 to 88 respectively are supported by the left casing half 76; and the leading end of the output shaft 115 with its based end portion fixed at the central portion of the closed end of the outer ring 85 is supported in a cantilever manner by the second bearing portion 91 provided on the right casing half 77 via the ball bearing 92; and the drive gear 107 for transmitting a power supplied from the output shaft 115 onto the rotational drive shaft 109 side is provided on the output shaft 115 at a position between the outer ring 85 and the second bearing portion 91.

Accordingly, the motor shaft 84 is supported by the first bearing portion 89 of the left casing half 76; the output shaft 115 is supported in a cantilever manner by the second bearing portion 91 of the right casing half 77; and the drive gear 107 is provided on the output shaft 115 between the outer ring 85 and the second bearing portion 91, so that the length between the outer ring 85 and second bearing portion 91, that is, the cantilever-supporting length of the output shaft 115 is made longer. With this configuration, even if the electric motor 34, outer ring 85 and reduction rollers 86 to 88 are assembled in the casing 75 at relatively rough accuracies, the motor shaft 84 and the output shaft 115 being made longer in its axial length and supported in a cantilever manner can be slightly deformed, so that the reduction rollers 86 to 88 can be certainly brought in rolling-contact with the motor shaft 84 and the outer ring 85, to thereby improve the productivity.

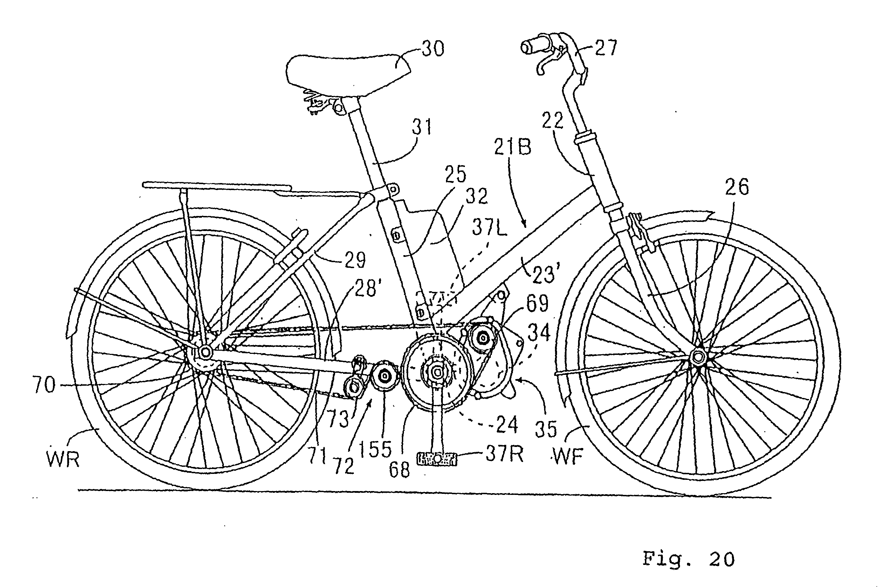

Fig. 20 shows a second embodiment of the present invention. In this figure, parts corresponding to those in the first embodiment are designated by the same reference numerals.

A body frame 21B of an electric power assist bicycle includes a head pipe 22 provided at the front end of the body frame 21B, a down pipe 23' extending rearwardly, downwardly from the head pipe 22, a seat post 25 fixed at the rear end of the down pipe 23' and extending in the vertical direction, and a supporting pipe 24 fixed at the lower end of the seat post 25 and extending right and left. A rear wheel WR is rotatably supported by the rear ends of a pair of right and left forked portions of a rear fork 28' extending rearwardly from the supporting pipe 24. A pair of right and left stays 29 are provided between the upper portion of the seat post 25 and both the forked portions of the rear fork 28'.

A power unit 35 having an electric motor 34 to which a power is supplied from a battery contained in a battery containing box 32 is disposed in front of the supporting pipe 24. The power unit 35 is supported by the supporting pipe 24 and the down pipe 23'.

A chain 71 is wound around a pedal sprocket 68 rotated by actuation of crank pedals 37R and 37L, a drive sprocket 69 of the power unit 35, a driven sprocket 70 of the rear wheel WR, and a sprocket 73 of a tensioner 72 provided on the right side forked portion of the rear fork 28'. An idle sprocket 155 having an upper half around which the chain 71 is wound is rotataly supported by the right side forked portion of the rear fork 28' at a position between the tensioner 72 and pedal sprocket 68.

According to the second embodiment, the distance between the rear wheel WR and the crank pedals 37R and 37L is made smaller than that in the first embodiment. That is to say, in the first embodiment, since the power unit 35 is disposed between the rear wheel WR and the crank pedals 37R and 37L, it is required to ensure a space for arrangement of the power unit 35 between the rear wheel WR and the crank pedals 37R and 37L. On the contrary, in the second embodiment, since the power unit 35 is arranged in a relatively wide space between the crank pedals 37R and 37L and a front wheel WF, it is possible to shorten the distance between the rear wheel WR and crank pedals 37R and 37L.

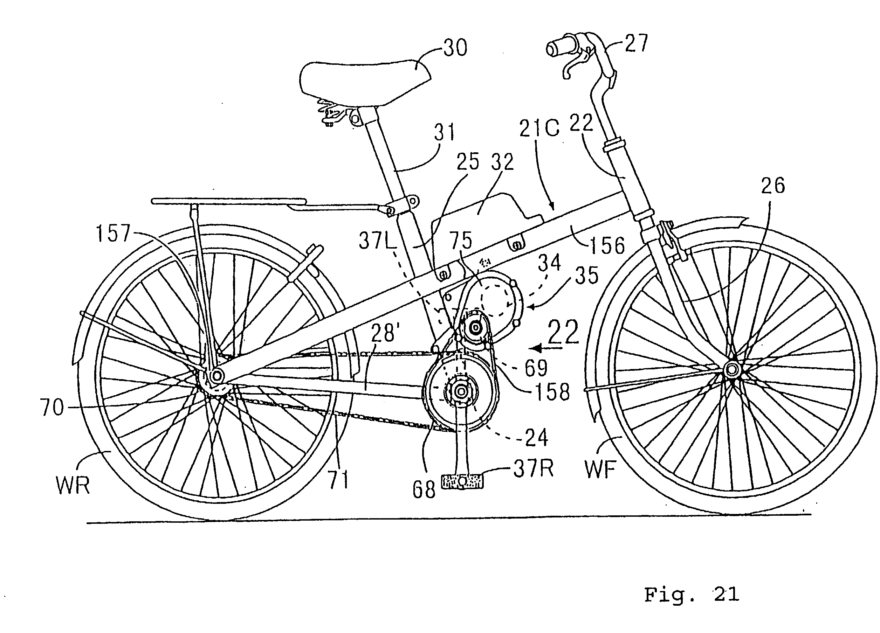

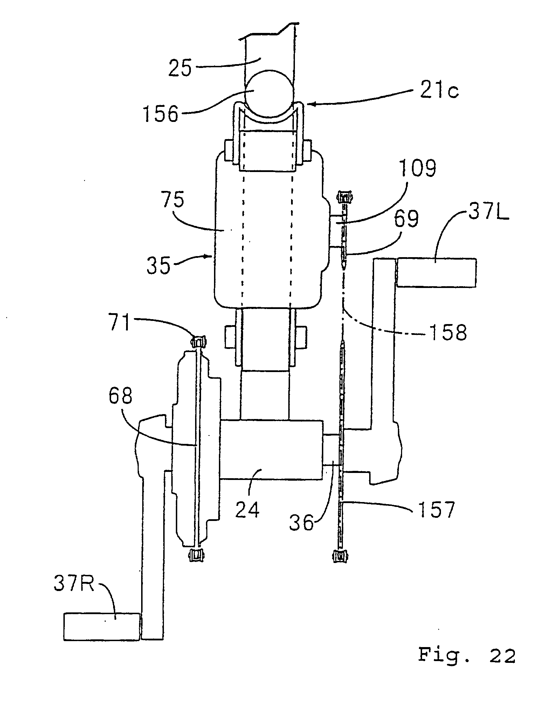

Figs. 21 and 22 show a third embodiment of the present invention, wherein Fig. 21 is a side view of an electric power assist bicycle and Fig. 22 is a view seen along an arrow 22 of Fig. 21.

A body frame 21C of an electric power assist bicycle includes a head pipe 22 provided at the front end of the body frame 21C, a main frame 156 extending rearwardly, downwardly from the head pipe 22, a seat post 25 extending in the vertical direction, and a supporting pipe 24 fixed at the lower end of the seat post 25 and extending right and left.

The rear portion of the main frame 156 is branched into two parts which in turn extend with the seat post 25 and a rear wheel WR put therebetween. The rear wheel WR is rotatably supported by an axle 157 which co-fastens the rear ends of a pair of right and left forked portions of a rear fork 28' extending rearwardly from the supporting pipe 24 and the rear ends of the branched portions of the main frame 156.

A power unit 35 having an electric motor 34 to which a power is supplied from a battery contained in a battery containing box 32 provided on the main frame 156 is disposed in front of the seat post 25. A casing 75 of the power unit 35 is supported by the main frame 156 and seat post 25 in such a manner that a drive sprocket 69 is disposed on the left side of the body frame 21C, and the main frame 156 is connected to the seat post 25 via the casing 75.

A driven sprocket 157 disposed lower than the drive sprocket 69 is fixed on a crank shaft 36 rotatably supported by the supporting pipe 24 in such a manner as to be adjacent to a left crank pedal 37L. An endless chain 158 is wound around the drive sprocket 69 and driven sprocket 157. That is to say, an assist power supplied from the electric motor 34 is transmitted to the crank shaft 36 via the chain 158.

A chain 71 is wound around a pedal sprocket 68 rotating with the crank shaft 36 and a driven sprocket 70 of the rear wheel WR.

According to the third embodiment, it is possible to shorten the distance between the rear wheel WR and crank pedals 37R and 37L like the second embodiment, and to eliminate the necessity of provision of the tensioner 72 which is required for the first and second embodiments.

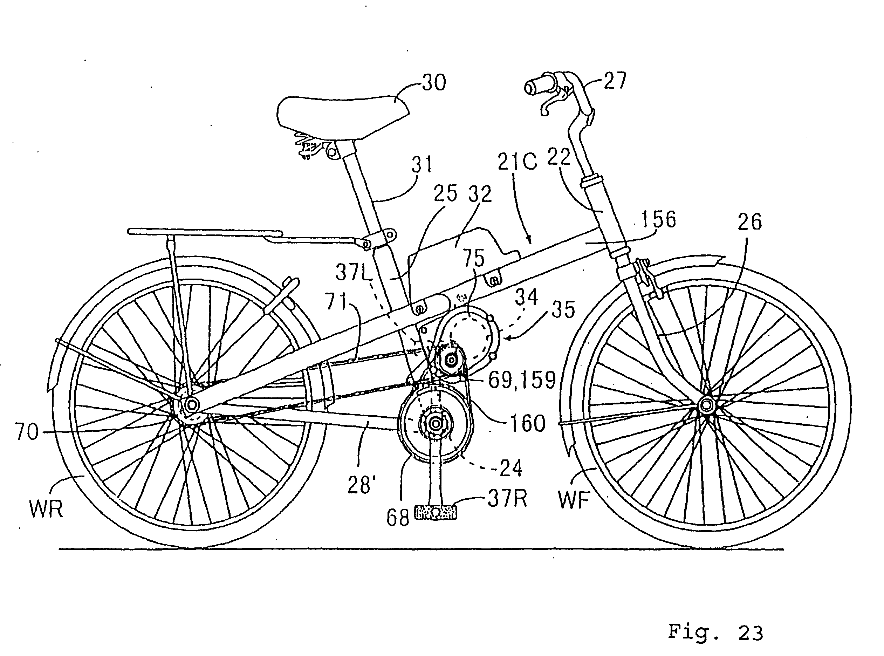

Fig. 23 shows a fourth embodiment of the present invention. In this figure, parts corresponding to those in the previous embodiments are designated by the same reference numerals.

A power unit 35 is disposed in front of a seat post 25 in such a manner that a drive sprocket 69 is disposed on the right side of the body frame 21C. An intermediate sprocket 159 rotating integrally with the drive sprocket 69 is disposed on the right side of the body frame 21C coaxially with the drive sprocket 69.

An endless chain 160 is wound around a pedal sprocket 68 rotating with a crank shaft 36 and the drive sprocket 69, and a chain 71 is wound around the intermediate sprocket 159 and a driven sprocket 70 of the rear wheel.

According to the fourth embodiment, like the third embodiment, it is possible to shorten the distance between the rear wheel WR and crank pedals 37R and 37L and eliminate the necessity of provision of the tensioner 72 which is required for the first and second embodiment, and to dispose both the chains 71 and 160 on the right side of the body frame 21C.

For example, the present invention can be applied not only to an electric power assist bicycle but also to a motor-driven wheelchair and the like.

In the above embodiment, a plurality of the projections 144 to be in contact with the inner periphery of the second retaining member 140 are provided on the outer periphery of the first retaining member 133; however, a plurality of projections to be in contact with the outer periphery of the first retaining member 133 may be provided on the inner periphery of the second retaining member 140.

As the sensor, an optical sensor or an electrostatic sensor may be used in place of the magnetic sensor described in the above embodiment.

## Claims

1. Input torque detecting apparatus for a power assist vehicle, comprising:
a first rotator (40) which is rotated in synchronization with rotation of input operating members (37R, 37L) manually operated for rotating a drive wheel (WR); and
a second rotator (48) which is disposed coaxially with said first rotator (40) with an elastic member (57) interposed between said first rotator (40) and said second rotator (48) and which is rotated in synchronization with rotation of said drive wheel (WR);
wherein an input torque into said input operating members (37R, 37L) is detected on the basis of a rotational phase difference produced between said first and second rotators (40, 48);
a first magnetic ring (131) formed by providing a plurality of N-poles and S-poles (131N, 131S), which are alternately, adjacently arranged in the circumferential direction into a ring shape, on an elastically deformable first retaining member (133) rotating with said first rotator (40);
a second magnetic ring (132) formed by providing a plurality of N-poles and S-poles (132N, 132S), which are arranged under the same angular positional relationship as that of the N-poles and S-poles (131N, 131S) of said first magnetic ring (131) into a ring shape, on an elastically deformable second retaining member (140) rotating with said second rotator (48);
a plurality of first sensors (145A, 145B), arranged at fixed positions facing to said first magnetic ring (131), for detecting the N-poles and S-poles (131N, 131S) of said first magnetic ring (131);
a plurality of second sensors (146A, 146B), arranged at fixed positions facing to said second magnetic ring (132), for detecting the N-poles and S-poles (132N, 132S) of said second magnetic ring (132); and
a torque decision means (124) for deciding a rotational phase difference between said first and second rotators (40, 48) on the basis of a combination pattern of signals detected by said first and second sensors (145A, 145B; 146A, 146B) and recognizing said rotational phase difference as an input torque to be applied to said input operating members (37R, 37L);
wherein one of the inner periphery and outer periphery of said first retaining member (133) is in contact with the other of the inner periphery and outer periphery of said second retaining member (140) at a plurality of positions spaced intervals in the circumferential direction.

2. An input torque detecting apparatus for a power assist vehicle according to claim 1, wherein an intermediate coupling member (136) is coupled to one of said first and second rotators (40, 48) in such a manner as to be movable in an allowable range in the direction along one diameter line of said one of said first and second rotators (40, 48), and one of said first and second magnetic rings (131, 132) is coupled to said intermediate coupling member (136) in such a manner as to be movable in an allowable range in the direction perpendicular to said diameter line.

## Patentansprüche

1. Eingangsdrehmoment-Erfassungsvorrichtung für ein Fahrzeug mit Hilfsantrieb, umfassend:
einen ersten Rotor (40), der synchron mit der Drehung von Eingangsbetätigungselementen (37R, 37L) gedreht wird, die zum Drehen eines Antriebsrads (WR) durch Muskelkraft betätigt werden; und
einen zweiten Rotor (48), der koaxial zu dem ersten Rotor (40) angeordnet ist, wobei ein elastisches Element (57) zwischen dem ersten Rotor (40) und dem zweiten Rotor (48) angeordnet ist, und der synchron mit der Drehung des Antriebsrads (WR) gedreht wird;
worin ein Eingangsdrehmoment in die Eingangsbetätigungselemente (37R, 37L) auf der Basis einer zwischen dem ersten und dem zweiten Rotor (40, 48) erzeugten Drehphasendifferenz erfasst wird;
einen ersten Magnetring (131), gebildet durch Vorsehen einer Mehrzahl von N-Polen und S-Polen (131N, 131S), die in der Umfangsrichtung abwechselnd einander benachbart zu einer Ringform angeordnet sind, an einem elastisch verformbaren ersten Halteelement (133), das sich mit dem ersten Rotor (40) dreht;
einen zweiten Magnetring (132), gebildet durch Vorsehen einer Mehrzahl von N-Polen und S-Polen (132N, 132S), die unter der gleichen Winkelpositionsbeziehung wie die der N-Pole und S-Pole (131N, 131S) des ersten Magnetrings (131) zu einer Ringform angeordnet sind, an einem elastisch verformbaren zweiten Halteelement (140), das sich mit dem zweiten Rotor (48) dreht;
eine Mehrzahl erster Sensoren (145A, 145B), die an zum ersten Magnetring (131) weisenden festen Positionen angeordnet sind, um die N-Pole und S-Pole (131N, 131S) des ersten Magnetrings (131) zu erfassen;
eine Mehrzahl zweiter Sensoren (146A, 146B), die an zu dem zweiten Magnetring (132) weisenden festen Positionen angeordnet sind, um die N-Pole und S-Pole (132N, 132S) des zweiten Magnetrings (132) zu erfassen; und
ein Drehmomentbestimmungsmittel (124) zum Bestimmen einer Drehphasendifferenz zwischen dem ersten und dem zweiten Rotor (40, 48) auf der Basis eines Kombinationsmusters von Signalen, die von den ersten und zweiten Sensoren (145A, 145B; 146A, 146B) erfasst sind, und zum Erkennen der Drehphasendifferenz als ein auf die Eingabebetätigungselemente (37R, 37L) auszuübendes Eingangsdrehmoment;
worin einer des Innenumfangs und des Außenumfangs des ersten Halteelements (133) mit dem anderen des Innenumfangs und des Außenumfangs des zweiten Halteelements (140) an einer Mehrzahl von Stellen, die in der Umfangsrichtung mit Abstandsintervallen angeordnet sind, in Kontakt steht.

2. Eingangsdrehmoment-Erfassungsvorrichtung für ein Fahrzeug mit Hilfsantrieb nach Anspruch 1, worin ein Zwischenkupplungselement (136) mit einem des ersten und des zweiten Rotors (40, 48) derart gekuppelt ist, dass es in einem zulässigen Bereich in der Richtung entlang einer Durchmesserlinie des einen des ersten und des zweiten Rotors (40, 48) beweglich ist, und einer des ersten und des zweiten Magnetrings (131, 132) mit dem Zwischenkupplungselement (136) derart gekuppelt ist, dass er in einem zulässigen Bereich in einer zu der Durchmesserlinie orthogonalen Richtung beweglich ist.

## Revendications

1. Dispositif de détection de couple d'entrée pour véhicule à assistance motorisée comprenant :
un premier rotateur (40) qui est mis en rotation en synchronisation avec des éléments de mise en action d'entrée (37R, 37L) actionnés physiquement afin de faire tourner une roue d'entraînement (WR) ; et
un second rotateur (48) qui est disposé de manière coaxiale au dit premier rotateur (40), un élément élastique (57) étant disposé entre ledit premier rotateur (40) et ledit second rotateur (48) et qui est mis en rotation en synchronisation avec la rotation de ladite roue d'entraînement (WR) ;
ce dispositif de détection étant réalisé de telle sorte qu'un couple d'entrée dans lesdits éléments de mise en action d'entrée (37R, 37L) est détecté sur la base d'une différence de phase de rotation se produisant entre lesdits premier et second rotateurs (40, 48) ;
une première couronne magnétique (131) formée par la fourniture d'une pluralité de pôles N et de pôles S (131N, 131S), qui sont aménagés de manière alternée et adjacente dans le sens de la circonférence à l'intérieur d'une pièce en forme de couronne, sur un premier élément de retenue à déformation élastique (133) tournant avec ledit premier rotateur (40) ;
une seconde couronne magnétique (132) formée par la fourniture d'une pluralité de pôles N et de pôles S (132N, 132S), qui sont aménagés dans la même relation de position angulaire que celle des pôles N et des pôles S (131N, 131S) de ladite première couronne magnétique (131) à l'intérieur d'une pièce en forme en couronne, sur un second élément de retenue à déformation élastique (140) tournant avec ledit second rotateur (48) ;
une pluralité de premiers détecteurs (145A, 145B), aménagés à des positions fixes faisant face à ladite première couronne magnétique (131), destinés à détecter les pôles N et les pôles S (131N, 131S) de ladite première couronne magnétique (131) ;
une pluralité de seconds détecteurs (146A, 146B), aménagés à des positions fixes faisant face à ladite seconde couronne magnétique (132), destinés à détecter les pôles N et les pôles S (132N, 132S) de ladite seconde couronne magnétique (131) ; et
des moyens de décision de couple (124) destinés à décider d'une différence de phase de rotation entre lesdits premier et second rotateurs (40, 48) sur la base d'un schéma de combinaison de signaux détectés par lesdits premiers et seconds détecteurs (145A, 145B ; 146A, 146B) et à reconnaître ladite différence de phase de rotation en tant que couple d'entrée à appliquer aux dits éléments de mise en action d'entrée (37R, 37L) ;
ce dispositif de détection étant réalisé de telle sorte que l'une de la périphérie interne et de la périphérie externe dudit premier élément de retenue (133) est en contact avec l'autre périphérie de la périphérie interne et de la périphérie externe dudit second élément de retenue (140) sur une pluralité de positions à intervalles espacés dans le sens de la circonférence.

2. Dispositif de détection de couple d'entrée pour véhicule à assistance motorisée selon la revendication 1, **caractérisé en ce qu'**un élément d'accouplement intermédiaire (136) est accouplé à l'un desdits premier et second rotateurs (40, 48) de manière à pouvoir se déplacer dans une plage acceptable le long de la ligne diamétrale dudit un desdits premier et second rotateurs (40, 48), et **en ce que** l'une desdites première et seconde couronnes magnétiques (131, 132) est accouplée au dit élément d'accouplement intermédiaire (136) de manière à pouvoir se déplacer dans une plage acceptable dans la direction perpendiculaire à ladite ligne diamétrale.
